# EUROPEAN PATENT APPLICATION

(11) **EP 4 434 377 A1**
(43) Date of publication of application: **25.09.2024**
(21) Application number: 21964772.4
(22) Date of filing: 19.11.2021
(51) Int. Cl.: A24F 40/57

(54) **INHALATION DEVICE**

(71) Applicant: Japan Tobacco Inc., Tokyo 105-6927 (JP)
(72) Inventor: NAKANO, Takuma, Tokyo 130-8603 (JP); MIZUGUCHI, Kazuma, Tokyo 130-8603 (JP)
(74) Representative: Hoffmann Eitle
(86) International application number: PCT/JP2021/042548
(87) International publication number: WO 2023/089757

(57) **Abstract**

The present invention comprises a heating unit for heating an aerosol source that generates an aerosol due to being heated, a power supply unit for storing electric power, and a control unit for controlling the supply of electric power from the power supply unit to the heating unit. When generation of the aerosol is requested, the control unit implements first heating such that the temperature of the aerosol source reaches a temperature equal to or higher than a first temperature at which the aerosol source is atomized. When an event in which it is anticipated that generation of the aerosol will be requested is detected before generation of the aerosol is requested, the control unit implements second heating involving heating prior to the first heating such that the temperature of the aerosol source reaches a temperature equal to or higher than a second temperature and lower than the first temperature.

## Description

### Technical Field

The present invention relates to an inhaler device.

### Background Art

A device described in PTL 1, for example, starts to heat a load, after receiving a request to generate an aerosol input from a user, in a device that generates an aerosol by heating an aerosol-source material, which is, for example, a solid object to which an aerosol source is added or loaded. After the heating starts, a preparation state, where a predetermined amount of aerosol or more cannot be generated from the aerosol-source material, transitions to a use state, where the predetermined amount of aerosol or more can be generated from the aerosol-source material. In the preparation state, the user is not allowed to inhale the aerosol and allowed to inhale the aerosol after the use state is established.

### Citation List

### Patent Literature

PTL 1: WO2019/186670

### Summary of invention

### Technical Problem

The timetaken to allow a user to inhale an aerosol after a request to generate an aerosol is received is desirably short. It is therefore possible to start heating before a request to generate an aerosol is received. If a request to generate an aerosol is not actually given after heating is started prior to a request to generate an aerosol, electric power used for the heating is undesirably wasted.

The present invention aims to provide an inhaler device capable of promptly establishing a state where a predetermined amount of aerosol or more can be generated while reducing electric power wasted by heating.

### Solution to Problem

A first feature of the present invention completed with these objectives in mind is an inhaler device including a heater that heats an aerosol source, which, when heated, generates an aerosol, a power supply that accumulates electric power, and a controller that controls supply of electric power from the power supply to the heater. If a request to generate the aerosol is given, the controller performs first heating in order to increase temperature of the aerosol source to a first temperature, at which the aerosol source is atomized, or higher and, if an event regarded as a sign of the request is detected before the request is given, performs second heating in order to increase the temperature of the aerosol source to a second temperature or higher but lower than the first temperature before the first heating.

A second feature may be that, if a predetermined ending condition is satisfied after the second heating starts, the controller stops the second heating.

A third feature may be that the controller makes electric power in the first heating that has started after the second heating smaller than electric power in the first heating that has started without the second heating being performed.

A fourth feature may be that the inhaler device further includes an operation section operable by a user. The request may be a predetermined first operation performed on the operation section. The event may be a predetermined second operation, which is defined as different from the first operation, performed on the operation section.

A fifth feature may be that the inhaler device further includes a gyro sensor. The event may be a change of an output value of the gyro sensor from a value indicating a state where height of the power supply and height of the heater are the same to a value indicating a state where the height of the heater is greater than the height of the power supply.

A sixth feature may be that the inhaler device further includes a tactile sensor that detects that the user is touching the inhaler device with his/her hand. The event may be an output value of the tactile sensor indicating that the user is touching the inhaler device with his/her hand.

A seventh feature may be that the inhaler device further includes an acceleration sensor. The event may be an output value of the acceleration sensor becoming larger than or equal to a predetermined threshold.

### Advantageous Effects of invention

According to the first feature, a state where a predetermined amount of aerosol or more can be generated can be promptly established while reducing electric power wasted by heating.

According to the second feature, electric power wasted can be reduced even if a request to generate an aerosol is not given after the second heating is performed.

According to the third feature, even when a priority level of supply of electric power to the heater is the highest, electric power can be easily supplied to components other than the heater.

According to the fourth feature, since the second heating is performed on the basis of a user operation, electric power wasted by the second heating can be reduced more reliably.

According to the fifth feature, an increase in a possibility that a request to generate an aerosol will be given can be detected more reliably.

According to the sixth feature, an increase in the possibility that a request to generate an aerosol will be given can be detected more reliably.

According to the seventh feature, an increase in the possibility that a request to generate an aerosol will be given can be detected more reliably.

### Brief Description of Drawings

[Fig. 1] Fig. 1 is a diagram schematically illustrating an example of a schematic configuration of an inhaler device according to a first embodiment.
[Fig. 2] Fig. 2 is a flowchart illustrating an example of a procedure of a heating process performed by a controller.
[FigS. 3A and 3B] Fig. 3A is a timing chart at a time when first inhalation heating is performed, and Fig. 3B is a timing chart at a time when second inhalation heating is performed.
[Fig. 4] Fig. 4 is a diagram illustrating an example of a schematic configuration of a sensor and a controller according to a modification.
[Figs. 5A to 5C] Figs. 5A to 5C are Diagrams illustrating a relationship between first inhalation heating power and second inhalation heating power.
[Fig. 6] Fig. 6 is a diagram schematically illustrating an example of a schematic configuration of an inhaler device according to a second embodiment.
[Fig. 7] Fig. 7 is a diagram schematically illustrating an example of a schematic configuration of an inhaler device according to a third embodiment.
[Fig. 8] Fig. 8 is a diagram schematically illustrating an example of a schematic configuration of an inhaler device according to a fourth embodiment.
[Fig. 9] Fig. 9 is a diagram schematically illustrating an example of a schematic configuration of an inhaler device according to a fifth embodiment.
[Fig. 10] Fig. 10 is a diagram schematically illustrating an example of a schematic configuration of an inhaler device according to a sixth embodiment.

### Description of Embodiments

Embodiments of the present invention will be described in detail hereinafter with reference to the accompanying drawings.

### <First Embodiment>

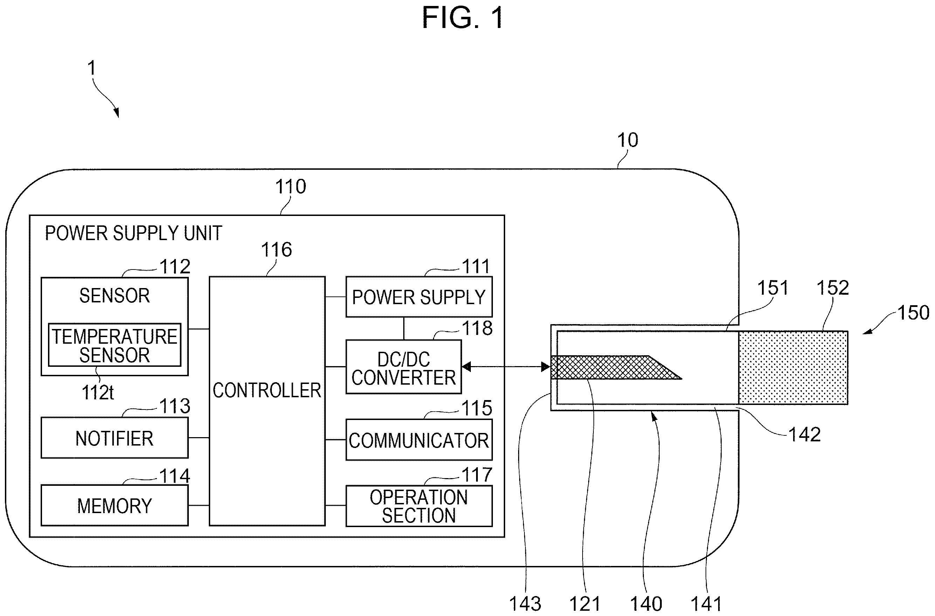

Fig. 1 is a diagram schematically illustrating an example of a schematic configuration of an inhaler device 1 according to a first embodiment.

The inhaler device 1 according to the first embodiment is a device that generates a substance to be inhaled by a user. It is assumed in the following description that the substance generated by the inhaler device 1 is an aerosol. Alternatively, the substance generated by the inhaler device 1 may be a gas.

The inhaler device 1 generates the aerosol by heating a substrate including an aerosol source from the inside.

The inhaler device 1 includes a power supply unit 110, a heater 121, and a holder 140. The inhaler device 1 also includes a housing 10 that accommodates the power supply unit 110, the heater 121, and the like. With the inhaler device 1, the user inhales with a stick substrate 150, which is a stick-shaped member, held by the holder 140.

As illustrated in Fig. 1, the power supply unit 110 includes a power supply 111, a sensor 112, a notifier 113, a memory 114, a communicator 115, a controller 116, an operation section 117 operable by the user, and a DC/DC converter 118. The individual structural elements will be described hereinafter one by one.

The power supply 111 accumulates electric power. The power supply 111 then supplies electric power to each structural element of the inhaler device 1. The power supply 111 can be implemented by a rechargeable battery such as a lithium-ion secondary battery. The power supply 111 may be connected to an external power supply through USB (universal serial bus) cable or the like and charged. The power supply 111 may be charged using a wireless power transmission technology, without being physically connected to a power transmission device. In addition, the power supply 111 may be independently removable from the inhaler device 1 or replaceable with a new power supply 111.

The sensor 112 detects various pieces of information regarding the inhaler device 1. In an example, the sensor 112 includes a temperature sensor 112t that detects temperature of the heater 121. The sensor 112 then outputs the detected information to the controller 116. For example, the sensor 112 outputs information regarding a temperature to the controller 116 after the temperature sensor 112t detects the temperature of the heater 121.

The notifier 113 notifies the user of information. In an example, the notifier 113 is implemented as a light-emitting device such as an LED (light-emitting diode). In this case, the notifier 113 lights up in different patterns of light depending on whether, for example, the power supply 111 needs to be charged, the power supply 111 is being charged, or an abnormality has occurred in the inhaler device 1. The patterns of light here are a concept including color, on/off timing, and the like. The notifier 113 may be implemented by a display device that displays images, a sound output device that outputs sounds, a vibration device that vibrates, or the like along with, or instead of, the light-emitting device.

The memory 114 stores various pieces of information for operating the inhaler device 1. The memory 114 is implemented, for example, by a non-volatile storage medium such as a flash memory. An example of the information stored in the memory 114 is information relating to an OS (operating system) of the inhaler device 1, such as details of control performed by the controller 116 on the various structural elements. Another example of the information stored in the memory 114 is information relating to the user's inhalation, such as the number of times of inhalation, inhalation time, and an accumulated inhalation time period.

The communicator 115 is a communication interface for communicating information between the inhaler device 1 and other apparatuses. The communicator 115 performs communication in conformity with any wired or wireless communication standard. Such a communication standard may be, for example, a wireless LAN (local area network), wired LAN, Wi-Fi (registered trademark), Bluetooth (registered trademark), or the like. In an example, the communicator 115 transmits information relating to the user's inhalation to a smartphone in order to display the information relating to the user's inhalation on the smartphone. In another example, the communicator 115 receives new information regarding the OS from a server in order to update the information regarding the OS stored in the memory 114.

The controller 116 functions as an arithmetic processing unit and a control device and controls overall operation of the inhaler device 1 in accordance with various programs. The controller 116 is implemented, for example, by an electronic circuit such as a CPU (central processing unit) or a microprocessor. The controller 116 may also include a ROM (read-only memory) storing programs to be used, arithmetic parameters, and the like and a RAM (random-access memory) that temporarily stores parameters that vary over time and the like. The inhaler device 1 performs various types of processing under control of the controller 116. Examples of the processing controlled by the controller 116 include supply of electric power from the power supply 111 to each of the other structural elements, charging of the power supply 111, detection of information by the sensor 112, information notification by the notifier 113, storage and reading of information by the memory 114, and communication of information by the communicator 115. The controller 116 also controls other types of processing performed by the inhaler device 1, including inputting of information to each structural element and processing based on information output from each individual structural element.

The operation section 117 is implemented as button switches, a touch panel, or the like. The operation section 117 is exposed from a surface of the housing 10. The operation section 117 outputs information operated by the user to the controller 116. If a predetermined activation operation is performed on the operation section 117 with the power supply unit 110 being off, for example, the operation section 117 outputs a command to activate the power supply unit 110 to the controller 116. Upon obtaining the command, the controller 116 activates the power supply unit 110. An example of the predetermined activation operation performed on the operation section 117 is three quick consecutive presses on the operation section 117.

The DC/DC converter 118 is connected between the heater 121 and the power supply 111. The controller 116 is connected between the DC/DC converter 118 and the power supply 111.

The DC/DC converter 118 is a booster circuit capable of increasing an input voltage and is configured to be able to supply a voltage obtained by increasing the input voltage, or the input voltage, to the heater 121. With the DC/DC converter 118, electric power supplied to the heater 121 can be adjusted. As the DC/DC converter 118, for example, a switching regulator that converts an input voltage into a desired output voltage by controlling on/off periods of a switching element while monitoring the output voltage may be used. When such the switching regulator is used as the DC/DC converter 118, an input voltage may be output as is without being increased through control of the switching element.

The temperature sensor 112t includes a voltage sensor and a current sensor. The voltage sensor measures a value of a voltage applied to the heater 121 and outputs the value. The current sensor measures a value of a current flowing through the heater 121 and outputs the value. The outputs of the voltage sensor and the current sensor are input to the controller 116. The controller 116 obtains a resistance value of the heater 121 on the basis of the outputs of the voltage sensor and the current sensor and then obtains the temperature of the heater 121 based on the resistance value. The temperature of the heater 121 can be regarded as substantially the same as temperature of the aerosol source heated by the heater 121.

When a configuration where a constant current flows to the heater 121 when the resistance value of the heater 121 is obtained is employed, the temperature sensor 112t need not include a current sensor. Similarly, when a configuration where a constant voltage is applied to the heater 121 when the resistance value of the heater 121 is obtained is employed, the temperature sensor 112t need not include a voltage sensor.

The temperature sensor 112t may be, for example, a thermistor provided close to the heater 121, instead.

The holder 140 has an internal space 141 and holds the stick substrate 150 while accommodating part of the stick substrate 150 in the internal space 141. The holder 140 has an opening 142 that allows the internal space 141 to communicate with the outside and holds the stick substrate 150 inserted into the internal space 141 from the opening 142. For example, the holder 140 may be a tubular body having the opening 142 and a bottom 143 at two ends thereof, respectively, and defines the pillar-shaped internal space 141. Inside diameter of the holder 140 is smaller than outside diameter of the stick substrate 150 in at least part of a height direction of the tubular body, and the holder 140 can hold the stick substrate 150 by compressing the stick substrate 150 inserted into the internal space 141 from an outer circumference of the stick substrate 150. The holder 140 also has a function of defining a path of air supplied to the stick substrate 150. The bottom 143, for example, has an air inlet hole that serves as an inlet of air into the airflow path. The opening 142, on the other hand, has an air outlet hole that serves as an outlet of air from the airflow path.

The stick substrate 150 includes a substrate 151 and an inhalation port 152. The substrate 151 includes an aerosol source. When heated, the aerosol source is atomized to generate an aerosol. The aerosol source may be a material derived from tobacco, such as shredded tobacco or a processed material obtained by forming a tobacco raw material into grains, a sheet, or powder. Alternatively, the aerosol source may include a material that is not derived from tobacco, such as a material made by use of a plant other than tobacco (e.g., mint, an herb, etc.). In an example, the aerosol source may include a flavor component such as menthol. When the inhaler device 1 is a medical inhaler, the aerosol source may include a medicine to be inhaled by a patient. The aerosol source is not limited to a solid, and may be, for example, a liquid such as polyhydric alcohol, which may be glycerine or propylene glycol, or water. The substrate 151 is at least partly accommodated in the internal space 141 of the holder 140 with the stick substrate 150 held by the holder 140.

The inhalation port 152 is a member held in the user's mouth during inhalation. The inhalation port 152 at least partly protrudes from the opening 142 when the holder 140 holds the stick substrate 150. When the user inhales with the inhalation port 152 protruding from the opening 142 held in his/her mouth, air flows into the holder 140 through an air inlet hole, which is not illustrated. The flowing air passes through the internal space 141 of the holder 140, that is, the substrate 151, and reaches the inside of the user's mouth along with the aerosol generated by the substrate 151.

The heater 121 heats the aerosol source to atomize the aerosol source and generate the aerosol. The heater 121 is composed of any material, such as a metal or a polyimide. For example, the heater 121 is formed in a shape of a blade and provided in such a way as to protrude from the bottom 143 of the holder 140 to the internal space 141 of the holder 140. When the stick substrate 150 is inserted into the holder 140, therefore, the blade-shaped heater 121 is inserted into the stick substrate 150 by piercing the substrate 151 of the stick substrate 150. When the heater 121 produces heat, the aerosol source included in the stick substrate 150 is heated from the inside of the stick substrate 150 and atomized to generate the aerosol. The heater 121 produces heat when receiving electric power from the power supply 111.

### (Heating Control Performed by Controller 116 on Heater 121)

The controller 116 is activated when the inhaler device 1 is turned on. When the operation section 117 is quickly pressed three times in a row, for example, the inhaler device 1 is turned on to activate the controller 116. When a request to generate an aerosol (hereinafter also referred to as a "generation request") is given, the controller 116 supplies electric power to the heater 121 in order to increase the temperature of the aerosol source included in the substrate 151 to a first temperature, at which the aerosol source is atomized, or higher An example of the generation request is continuous pressing of the operation section 117 for a predetermined period of time (e.g., 2 seconds) or longer. The generation request may be given using an operation section different from the operation section 117, which is used to perform the predetermined activation operation to turn on the inhaler device 1. An example of the first temperature is 230°C. The inhaler device 1 may be turned on when the inhaler device 1 is disconnected from a device (e.g., a device that charges the inhaler device 1) provided separately from the inhaler device 1.

A period from a start of the heating for increasing the temperature of the heater 121 to the first temperature or higher until a state where the stick substrate 150 can generate a predetermined amount of aerosol or more is established will be referred to as a "preheating period", and a period after the state where the stick substrate 150 can generate the predetermined amount of aerosol or more is established will be referred to as an "inhalable period". The preheating period ends when the temperature of the heater 121 reaches the first temperature. Alternatively, the preheating period may end when a predetermined period of time (e.g., 10 seconds) has elapsed since the temperature of the heater 121 reached the first temperature. Alternatively, the preheating period may end when a predetermined period of time (e.g., 30 seconds) has elapsed since the heating for increasing the temperature of the heater 121 to the first temperature or higher started. When the preheating period has ended and the inhalable period has started, the controller 116 notifies, through the notifier 113, the user that the inhalable period has started. In the inhalable period, the temperature of the heater 121 is kept within a predetermined temperature range (e.g., 230°C to 295°C).

As described above, when the user gives a generation request, for example, the controller 116 supplies electric power to the heater 121 in order to heat the heater 121 and increase the temperature of the aerosol source of the substrate 151 to the first temperature, at which the aerosol source is atomized, or higher. The supply of electric power to the heater 121 in view of heating the heater 121 and increasing the temperature of the aerosol source to the first temperature or higher will be referred to as "inhalation heating" hereinafter. The controller 116 starts the inhalation heating when a generation request is given.

If a predetermined condition for ending the inhalation heating (hereinafter also referred to as an "inhalation heating ending condition") is satisfied in the inhalable period, the inhalation heating is stopped. An example of the inhalation heating ending condition is elapse of a predetermined period of time (e.g., 6 minutes) since the start of the inhalable period. Another example of the inhalation heating ending condition is a predetermined number (e.g., 14 times) of inhalation operations performed after the start of the inhalable period. The inhalation operation is an operation where the user inhales while holding the inhalation port 152 of the stick substrate 150 in his/her mouth.

When heating the heater 121, the controller 116 controls electric power supplied to the heater 121 through the DC/DC converter 118 in such a way as to achieve temporal changes in target temperature specified in a heating profile stored in the memory 114 in advance. For example, the controller 116 controls the electric power supplied to the heater 121 on the basis of a deviation between the target temperature specified in the heating profile and a real temperature (hereinafter also referred to as an "actual temperature") of the heater 121. This temperature control for the heater 121 may be achieved, for example, through known feedback control.

If an event regarded as a sign of a generation request is detected before a generation request is given, on the other hand, the controller 116 supplies electric power to the heater 121 in order to increase the temperature of the aerosol source to a second temperature, which is higher than current temperature, or higher but lower than the first temperature. An example of the detection of an event regarded as a sign of a generation request is detection of a certain predetermined operation (e.g., a single press) performed using the operation section 117. The predetermined operation may be performed using an operation section different from the operation section 117, which is used to perform the predetermined activation operation to turn on the power supply unit 110. The predetermined operation may be performed using an operation section different from the operation section 117, which is used to give a generation request. An example of the second temperature is 40°C.

As described above, if an event regarded as a sign of a generation request is detected before a generation request is given, the controller 116 supplies electric power to the heater 121 in order to heat the heater 121 and increase the temperature of the aerosol source to the second temperature or higher but lower than the first temperature. The supply of electric power to the heater 121 in view of heating the heater 121 and increasing the temperature of the aerosol source to the second temperature or higher but lower than the first temperature will be referred to as "preliminary heating". The controller 116 starts the preliminary heating when an event regarded as a sign of a generation request is detected. The event regarded as a sign of a generation request will be referred to as a "precursor event".

When performing the preliminary heating, for example, the controller 116 performs control such that a value of electric power supplied to the heater 121 becomes a value of electric power determined in advance as a value of electric power during the preliminary heating. An example of the predetermined value of electric power is a value obtained through an experiment or the like and stored in the memory 114 or the ROM in advance. The predetermined value of electric power is defined, for example, such that the temperature of the heater 121 during the preliminary heating becomes a preliminary heating target temperature, which will be described later.

The controller 116 may set the target temperature of the heater 121 during the preliminary heating at the second temperature or higher but lower than the temperature at which the aerosol source is atomized and control the supply of electric power such that the temperature of the heater 121 during the preliminary heating becomes the target temperature. The target temperature of the heater 121 during the preliminary heating will be referred to as a "preliminary heating target temperature" hereinafter. An example of the preliminary heating target temperature is 100°C.

When performing the preliminary heating, for example, the controller 116 may control electric power supplied to the heater 121 through the DC/DC converter 118 such that the temperature of the heater 121 detected by the temperature sensor 112t becomes the preliminary heating target temperature. For example, the controller 116 may control the electric power supplied to the heater 121 on the basis of a deviation between the preliminary heating target temperature stored in the memory 114 and a real temperature (actual temperature) of the heater 121 detected by the temperature sensor 112t. The temperature control for the heater 121 may be achieved, for example, through known feedback control. The controller 116 may control the electric power supplied to the heater 121 on the basis of a deviation between a value (e.g., 95°C) lower than the preliminary heating target temperature and the actual temperature so that the actual temperature does not exceed the preliminary heating target temperature.

Since the preliminary heating target temperature is lower than a target temperature during the inhalation heating, the controller 116 makes electric power during the preliminary heating smaller than electric power during the inhalation heating. For example, the controller 116 makes a duty ratio of a PWM signal output to the DC/DC converter 118 during the preliminary heating lower than that during the inhalation heating. For example, the duty ratio during the inhalation heating may be 90%, and the duty ratio during the preliminary heating may be 30%.

When performing the preliminary heating, the controller 116 may fix the duty ratio at 30% until the actual temperature reaches the preliminary heating target temperature, and after the actual temperature reaches the preliminary heating target temperature, the controller 116 may change the duty ratio on the basis of a deviation between the actual temperature and the preliminary heating target temperature.

If a generation request is given during the preliminary heating, the controller 116 performs the inhalation heating.

As a process where the controller 116 starts to perform the inhalation heating by controlling the supply of electric power to the heater 121 in the inhaler device 1, therefore, the controller 116 might start the inhalation heating after performing the preliminary heating or without performing the preliminary heating, as described above. In the following description, the inhalation heating following the preliminary heating will be referred to as "first inhalation heating", and the inhalation heating without the preliminary heating will be referred to as "second inhalation heating".

If a predetermined condition for ending the preliminary heating (hereinafter also referred to as a "preliminary heating ending condition") is satisfied during the preliminary heating without a generation request being given, on the other hand, the controller 116 stops the preliminary heating, in order to reduce electric power wasted by the preliminary heating. An example of the preliminary heating ending condition is elapse of a predetermined period of time (e.g., 60 seconds) since the start of the preliminary heating.

With the inhaler device 1 configured as above, the first temperature tends to be reached more promptly in the first inhalation heating, where the preliminary heating is performed before the inhalation heating, than in the second inhalation heating, which does not involve the preliminary heating. With the inhaler device 1, therefore, the inhalable period tends to come earlier when the first inhalation heating is performed than when the second inhalation heating is performed.

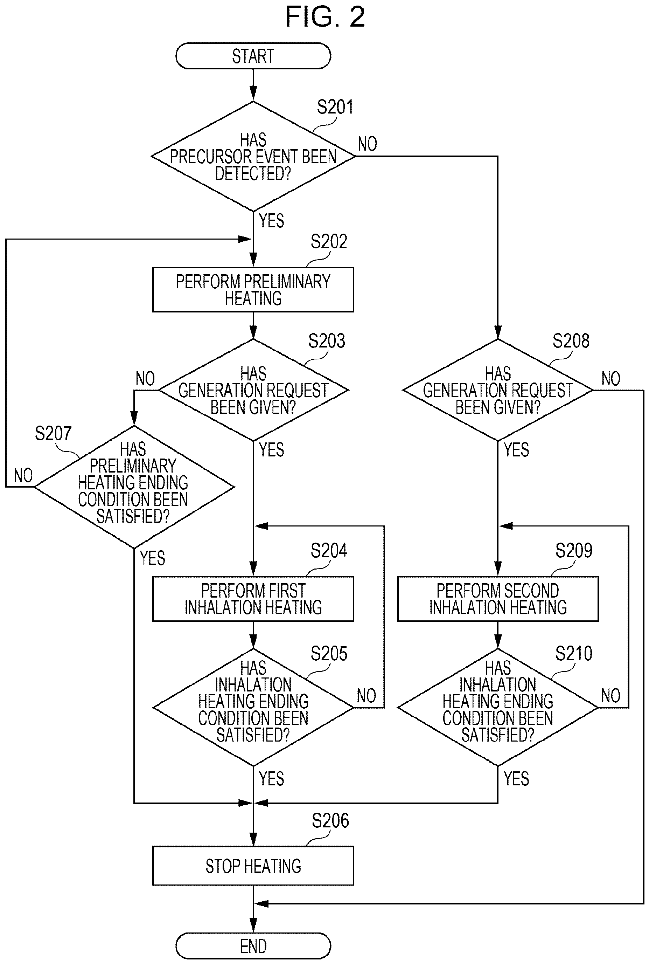

Fig. 2 is a flowchart illustrating an example of a procedure of a heating process performed by the controller 116.

The controller 116 repeats this process, for example, at a predetermined control cycle (e.g., every 1 millisecond).

The controller 116 determines whether a precursor event has been detected (S201). If detecting a precursor event (YES in S201), the controller 116 performs the preliminary heating (S202). The controller 116 then determines whether a generation request has been given (S203). If a generation request has been given (YES in S203), the controller 116 performs the first inhalation heating (S204). The controller 116 then determines whether the inhalation heating ending condition has been satisfied (S205). If determining that the inhalation heating ending condition has not been satisfied (NO in S205), the controller 116 performs the processing in S204 and later steps. If determining that the inhalation heating ending condition has been satisfied (YES in S205), the controller 116 stops the heating by stopping supplying electric power to the heater 121 from the power supply 111 (S206).

If determining in S203 that a generation request has not been given (NO in S203), on the other hand, the controller 116 determines whether the preliminary heating ending condition has been satisfied (S207). If the preliminary heating ending condition has not been satisfied (NO in S207), the controller 116 performs the processing in S202 and later steps. If the preliminary heating ending condition has been satisfied (YES in S207), on the other hand, the controller 116 stops the heating by stopping supplying electric power to the heater 121 from the power supply 111 (S206).

If determining in S201 that a precursor event has not been detected (NO in S201), on the other hand, the controller 116 determines whether a generation request has been given (S208). If a generation request has not been given (NO in S208), the controller 116 ends the process. If a generation request has been given (YES in S208), on the other hand, the controller 116 performs the second inhalation heating (S209). The controller 116 then determines whether the inhalation heating ending condition has been satisfied (S210). If determining that the inhalation heating ending condition has not been satisfied (NO in S210), the controller 116 performs the processing in S209 and later steps. If the inhalation heating ending condition has been satisfied (YES in S210), the controller 116 stops the heating by stopping supplying electric power to the heater 121 from the power supply 111 (S206).

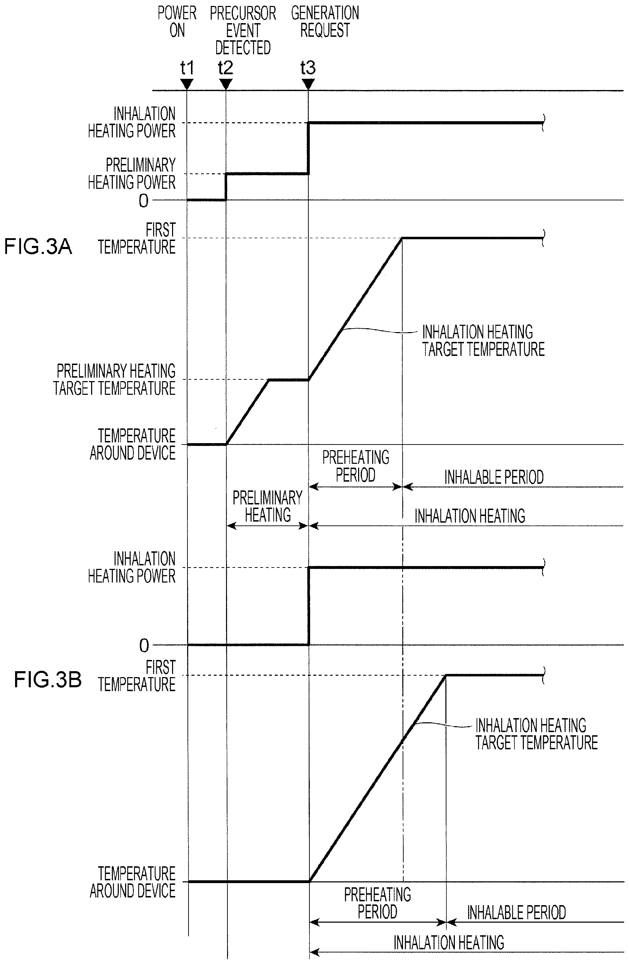

Fig. 3 A is a timing chart at a time when the first inhalation heating is performed, and Fig. 3B is a timing charge at a time when the second inhalation heating is performed.

Fig. 3 A illustrates changes in the temperature of the heater 121 at a time when an operation for turning on the inhaler device 1 (e.g., three quick consecutive presses on the operation section 117) is performed at a time t1, a precursor event is detected (e.g., a single press on the operation section 117 (an example of a second operation) is detected) at a later time t2, and a generation request (continuous pressing of the operation section 117 for the predetermined period of time (e.g., 2 seconds) or longer(an example of a first operation)) is given at a later time t3.

Fig. 3B illustrates changes in the temperature of the heater 121 at a time when an operation for turning on the inhaler device 1 is performed at the time t1 and a generation request is given at the later time t3.

Since the preliminary heating is performed before the inhalation heating is performed in the first inhalation heating illustrated in Fig. 3 A, the first temperature tends to be reached more promptly than in the case of the second inhalation heating illustrated in Fig. 3B. In the case of the first inhalation heating, therefore, the inhalable period tends to come earlier than in the case of the second inhalation heating.

As described above, the inhaler device 1 includes the heater 121, which heats an aerosol source that, when heated, generates an aerosol, the power supply 111, which accumulates electric power, and the controller 116, which controls the supply of electric power from the power supply 111 to the heater 121. When a request to generate an aerosol is given, the controller 116 performs the inhalation heating, which is an example of the first heating, in order to increase the temperature of the aerosol source to the first temperature, at which the aerosol source is atomized, or higher. If detecting an event regarded as a sign of a generation request before a generation request is given, the controller 116 performs the preliminary heating, which is an example of the second heating, in order to increase the temperature of the aerosol source to the second temperature or higher but lower than the first temperature before the inhalation heating.

With the inhaler device 1 configured as above, a state where the predetermined amount of aerosol or more can be generated can be established more promptly, by performing the inhalation heating after performing the preliminary heating, than when the inhalation heating is performed without the preliminary heating.

Although the second temperature is 40°C in the above example, the second temperature is not particularly limited to 40°C. Since the preliminary heating aims to increase the temperature of the aerosol source in advance before the inhalation heating is performed, it is only required that the second temperature be higher than temperature of a place where the inhaler device 1 is used. When the inhaler device 1 is used is Japan, for example, it is only required that the second temperature be higher than temperature of Japan. Since temperature changes depending on the season, the second temperature may be changed in accordance with the season. Although the preliminary heating target temperature is 100°C in the above example, the preliminary heating target temperature is not particularly limited to 100°C. The preliminary heating target temperature may be set as the second temperature + 60°C so that the preliminary heating target temperature changes as the second temperature changes. Similarly, when a value of electric power supplied to the heater 121 during the preliminary heating is a predetermined value of electric power, the predetermined value of electric power may change as the second temperature changes. That is, the predetermined value of electric power and the preliminary heating target temperature may change in accordance with the area and the season where the inhaler device 1 is used.

Since the preliminary heating is performed in the inhaler device 1 if an event regarded as a sign of a generation request is detected before a generation request is given, electric power wasted by the preliminary heating can be reduced compared to when, for example, the preliminary heating starts when the inhaler device 1 is turned on. That is, even when the inhaler device 1 is turned on, for example, the user does not necessarily give a generation request immediately. If the user does not give a generation request after the inhaler device 1 is turned on and the preliminary heating starts, electric power used for the preliminary heating is wasted. With the inhaler device 1, on the other hand, the preliminary heating starts after the inhaler device 1 is turned on if an event regarded as a sign of a generation request is detected, that is, for example, if the predetermined operation (e.g., a single press) is performed using the operation section 117. When an event regarded as a sign of a generation request is relevant to a generation request given by the user more highly than to other items (e.g., turning on of the inhaler device 1), it is likely that the inhalation heating will be performed after the preliminary heating. Electric power used to perform the preliminary heating, therefore, is unlikely to be wasted.

### (Detection of Event Regarded as Sign of Generation Request According to Modification)

Detection of an event (precursor event) regarded as a sign of a generation request according to a modification will be described hereinafter.

If the preliminary heating is performed before a request to generate an aerosol is given, a state where the predetermined amount of aerosol or more can be generated can be established promptly, but if a generation request is not actually given after the preliminary heating, electric power for the preliminary heating is wasted. When a period from the start of the preliminary heating until the preliminary heating target temperature is reached is called a "minimum heating period" and the preliminary heating starts the minimum heating period before a generation request is given, electric power for maintaining the preliminary heating target temperature after the preliminary heating target temperature is reached can be reduced. The minimum heating period depends on specifications of the heater 121 and the preliminary heating target temperature, but an example of the minimum heating period is 10 seconds or shorter. When the minimum heating period is 5 seconds, the preliminary heating target temperature can be easily achieved by a time of a generation request if the preliminary heating starts 5 seconds before the generation request is given.

The preliminary heating thus desirably starts the minimum heating period before a time at which a generation request is likely to be given.

In addition to the predetermined operation (e.g., a single press) on the operation section 117 described above, the following may be considered as a precursor event: a case where the inhaler device 1 has been placed in such a position that the user can visually recognize the operation section 117. This is because the user places the inhaler device 1 in such a position that he/she can operate the operation section 117, before giving a request to generate an aerosol (e.g., pressing of the operation section 117 for the certain period of time (e.g., 2 seconds) or longer).

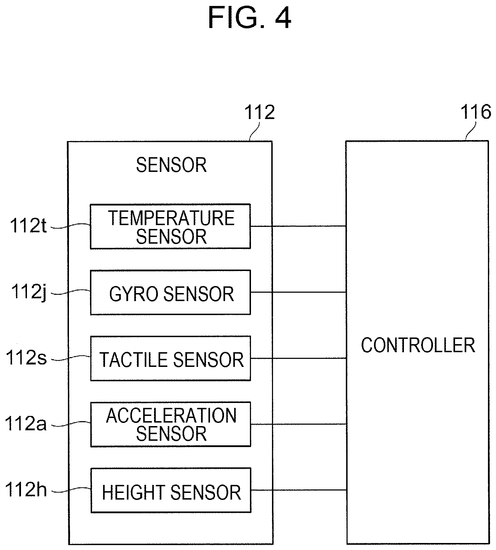

Fig. 4 is a diagram illustrating an example of a schematic configuration of the sensor 112 and the controller 116 according to the modification.

In view of the above circumstances, for example, the controller 116 detects a precursor event as follows.

Before giving a generation request, the user might pick up and lift the inhaler device 1 on, for example, a desk or a table. When the sensor 112 includes a gyro sensor 112j and an output value of the gyro sensor 112j indicates that an orientation of the inhaler device 1 has changed from horizontal to vertical, therefore, the controller 116 may detect a precursor event. The gyro sensor 112j may be provided, for example, in the housing 10. When the inhaler device 1 is put on a desk or a table, the inhaler device 1 is horizontally oriented with the power supply 111 and the heater 121 being at the same height. When the user gives a generation request, on the other hand, the inhaler device 1 is vertically oriented with the heater 121 being located higher than the power supply unit 110, that is, with height of the heater 121 being greater than that of the power supply 111. When the output value of the gyro sensor 112j changes from a value indicating a state where the height of the power supply 111 and that of the heater 121 are the same to a value indicating a state where the height of the heater 121 is greater than that of the power supply 111, therefore, the controller 116 may detect a precursor event. The state where the height of the power supply 111 and that of the heater 121 are the same is not limited to a case where the height of the power supply 111 is exactly the same as that of the heater 121, and may be a case where, for example, a difference in height between the power supply 111 and the heater 121 is 1 cm or smaller This is because when the difference in height between the power supply 111 and the heater 121 is 1 cm or smaller, the inhaler device 1 can be regarded as horizontally oriented.

Since the user touches the inhaler device 1 with his/her hand before giving a generation request, the sensor 112 may include a tactile sensor 112s, and when an output value of the tactile sensor 112s indicates that the user is touching the inhaler device 1 with his/her hand, the controller 116 may detect a precursor event. The tactile sensor 112s may be mounted on the housing 10, which accommodates the power supply unit 110, while, for example, being exposed from the surface of the housing 10.

In addition, before giving a generation request, the user might move the inhaler device 1 from, for example, around his/her waist to a position at which the user can operate the operation section 117. The sensor 112, therefore, may include an acceleration sensor 112a, and when an output value of the acceleration sensor 112a becomes larger than or equal to a predetermined threshold, the controller 116 may detect a precursor event. When the inhaler device 1 is moved upward, downward inertia is caused, and the acceleration sensor 112a indicates positive acceleration, and when the inhaler device 1 is moved downward, upward inertia is caused, and the acceleration sensor 112a indicates negative acceleration. When the output value of the acceleration sensor 112a becomes larger than or equal to the predetermined threshold, therefore, it may be considered that the user has moved the inhaler device 1 from around his/her waist to his/her mouth in order to perform an inhalation operation.

When the inhaler device 1 is moved from around the waist to the mouth, height of the inhaler device 1 changes by a difference in height between around the waist and the mouth. The sensor 112, therefore, may include a height sensor 112h, and when the amount of change in an output value of the height sensor 112h becomes larger than or equal to a predetermined threshold, the controller 116 may detect a precursor event. When the sensor 112 includes a pressure sensor (not illustrated) such as a microphone condenser in order to detect a value based on the user's inhalation, the controller 116 may estimate, if the amount of change in an output value of the pressure sensor, not the output value of the height sensor 112h, becomes larger than or equal to a predetermined threshold, that the inhaler device 1 has been moved from around the waist to the mouth and detect a precursor event.

The inhaler device 1 may include at least two of the above-described gyro sensor 112j, tactile sensor 112s, acceleration sensor 112a, and height sensor 112h, and the controller 116 may detect a precursor event on the basis of the output values of the two or more sensors and the like. When the output value of the gyro sensor 112j indicates that the inhaler device 1 is vertically oriented and the output value of the acceleration sensor 112a indicates that the inhaler device 1 has been moved upward, for example, the controller 116 may detect a precursor event. As a result, a precursor event can be detected more accurately.

The inhaler device 1 may include at least three of the above-described gyro sensor 112j, tactile sensor 112s, acceleration sensor 112a, and height sensor 112h, and the controller 116 may detect a precursor event on the basis of the output values of these three sensors and the like. When the output value of the gyro sensor 112j indicates that the inhaler device 1 is vertically oriented, the output value of the tactile sensor 112s indicates that the user is touching the inhaler device 1 with his/her hand, and the output value of the acceleration sensor 112a indicates that the inhaler device 1 has been moved upward, for example, the controller 116 may detect a precursor event.

### (End of Preliminary Heating)

As described above, in the inhaler device 1, the controller 116 stops the preliminary heating if the preliminary heating ending condition is satisfied after the preliminary heating is performed. The controller 116 stops the preliminary heating when, for example, the predetermined period of time (e.g., 60 seconds) has elapsed since the preliminary heating started. Since, if a generation request is not given, a period of time for which the preliminary heating is performed can be reduced compared to a configuration where the preliminary heating continues until the user gives a request to generate an aerosol, therefore, electric power for the preliminary heating can be reduced.

In addition to the elapse of the predetermined period of time (e.g., 60 seconds) since the start of the preliminary heating described above, the following may be considered as a preliminary heating ending condition.

The controller 116 may use a case where the output value of the gyro sensor 112j indicates that the orientation of the inhaler device 1 has changed from vertical to horizontal as another example of the preliminary heating ending condition. In other words, the controller 116 may use a case where the output value of the gyro sensor 112j has changed from one indicating that the height of the heater 121 is greater than that of the power supply 111 to one indicating the height of the heater 121 is the same as that of the power supply 111 as another example of the preliminary heating ending condition. This is because it is considered that the user is unlikely to give a generation request when, for example, the inhaler device 1 is put on a desk or a table.

In addition, the controller 116 may use a case where the output value of the tactile sensor 112s no longer indicates that the user is touching the inhaler device 1 with his/her hand as a preliminary heating ending condition. This is because it is considered that the user is unlikely to give a generation request when the user is no longer touching the inhaler device 1 with his/her hand.

In addition, the controller 116 may use a case where the output value of the acceleration sensor, which indicates negative acceleration when the inhaler device 1 is moved downward, has become smaller than or equal to a predetermined negative threshold as a preliminary heating ending condition. This is because it is considered that the user is unlikely to give a generation request when, for example, the user has moved the inhaler device 1 from a position at which the user can visually recognize the operation section 117 to around his/her waist.

In consideration of a fact that the amount of change in height becomes a negative value when the inhaler device 1 is moved downward, the controller 116 may use a case where the amount of change in the output value of the height sensor 112h has become smaller than or equal to a predetermined negative threshold as a preliminary heating ending condition. This is because it is considered that the user is unlikely to give a generation request when, for example, the user has moved the inhaler device 1 from his/her mouth to around his/her waist. In addition, the controller 116 may estimate, if the amount of change in the output value of the pressure sensor, not the output value of the height sensor 112h, becomes smaller than or equal to a predetermined negative threshold, that the inhaler device 1 has been moved from the mouth to around the waist and determine that the preliminary heating ending condition has been established.

The inhaler device 1 may include at least two of the above-described gyro sensor 112j, tactile sensor 112s, acceleration sensor 112a, and height sensor 112h, and the controller 116 may determine, on the basis of the output values of the two or more sensors, whether the preliminary heating ending condition has been satisfied.

When the output value of the acceleration sensor 112a indicates that the inhaler device 1 has been moved downward and the output value of the gyro sensor 112j indicates that the inhaler device 1 is horizontally oriented, for example, the controller 116 may determine that the preliminary heating ending condition has been satisfied. As a result, it can be determined more accurately that the inhalation operation will not be performed within the minimum heating period.

When the above-described conditions are used as preliminary heating ending conditions, the controller 116 can promptly and reliably determine that the user is unlikely to give a generation request and stop the preliminary heating, thereby reducing electric power wasted by the preliminary heating.

Although the controller 116 starts the preliminary heating if detecting an event (precursor event) regarded as a sign of a generation request in the above-described embodiment, how the controller 116 starts the preliminary heating is not limited to this mode. The controller 116 may start the preliminary heating without detecting a precursor event, instead. For example, the controller 116 may start the preliminary heating immediately after the inhaler device 1 is turned on and activated. That is, when the operation section 117 is quickly pressed three times in a row, for example, the inhaler device 1 may be turned on, the controller 116 may be activated, and the preliminary heating may immediately start. By performing the preliminary heating, time taken, after a generation request is given, to establish a state where the predetermined amount of aerosol or more can be generated can be reduced. Electric power wasted by the preliminary heating can then be reduced by stopping the preliminary heating if one of the above-described preliminary heating ending conditions is satisfied.

### (Electric Power Supplied during Inhalation Heating According to Modification)

The controller 116 may make electric power supplied to the heater 121 during the first inhalation heating (hereinafter also referred to as "first inhalation heating power") smaller than electric power supplied to the heater 121 during the second inhalation heating (hereinafter also referred to as "second inhalation heating power") (first inhalation heating power < second inhalation heating power).

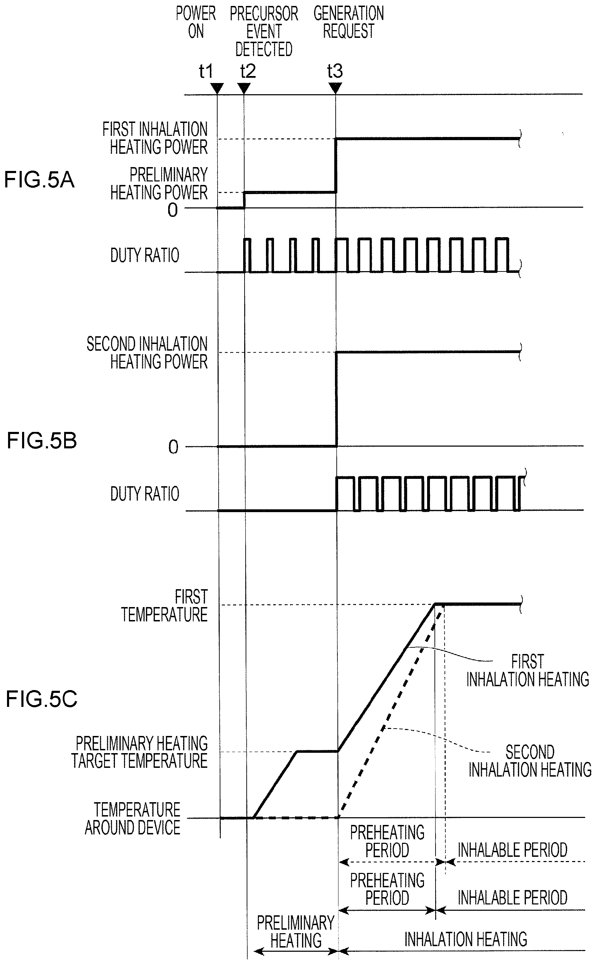

Figs. 5A to 5C are diagrams illustrating a relationship between the first inhalation heating power and the second inhalation heating power. Fig. 5A is a timing chart at a time when the first inhalation heating is performed, and Fig. 5B is a timing chart at a time when the second inhalation heating is performed. Fig. 5C is a diagram illustrating changes in the temperature of the heater 121 at a time when the inhaler device 1 performs the first inhalation heating as illustrated in Fig. 5A and the second inhalation heating as illustrated in Fig. 5B. Fig. 5A illustrates changes in electric power at a time when the inhaler device 1 is turned on at the time t1, a precursor event is detected at the later time t2, and a generation request is given at the later time t3. Fig. 5B illustrates changes in electric power at a time when the inhaler device 1 is turned on at the time t1 and a generation request is given at the later time t3.

For example, the controller 116 makes a duty ratio of a PWM signal output to the DC/DC converter 118 during the first inhalation heating smaller than that during the second inhalation heating. The controller 116 may set, for example, the duty ratio during the first inhalation heating at 50% and the duty ratio during the second inhalation heating at 90%. When performing the first inhalation heating, the controller 116 may fix the duty ratio at 50% until the actual temperature reaches the first temperature and change the duty ratio on the basis of a deviation between the actual temperature and a target temperature after the actual temperature reaches the first temperature. When performing the second inhalation heating, the controller 116 may fix the duty ratio at 90% until the actual temperature reaches the first temperature and change the duty ratio on the basis of a difference between the actual temperature and a target temperature after the actual temperature reaches the first temperature.

By making the first inhalation heating power smaller than the second inhalation heating power, electric power that can be supplied to the components other than the heater 121 (e.g., the notifier 113 and the communicator 115) becomes larger during the first inhalation heating than during the second inhalation heating. During the preheating period, for example, a priority level of the supply of electric power to the heater 121 may be the highest, and priority levels of the supply of electric power to the other components may be lower. When the priority level of the supply of electric power to the heater 121 is the highest and the duty ratio in the preheating period of the second inhalation heating is 90%, it is difficult to supply electric power to the other components in the preheating period. When the duty ratio in the preheating period of the first inhalation heating is, say, 50%, on the other hand, remaining 50% of electric power can be supplied to the other components, that is, electric power can be easily supplied to the other components in the preheating period, even if the priority level of the supply of electric power to the heater 121 is the highest. As a result, for example, it is easy to notify the user of information through the notifier 113 and communicate information with other devices through the communicator 115.

Although the duty ratio during the first inhalation heating is set at 50% and the duty ratio during the second inhalation heating is set at 90% to make the first inhalation heating power smaller than the second inhalation heating power, the duty ratios used are not particularly limited to these. The two duty ratios are desirably set such that time taken to reach the first temperature after the inhalation heating starts in a case where the first inhalation heating starts after the preliminary heating target temperature is reached becomes shorter than time taken to reach the first temperature after the inhalation heating starts in a case where the second inhalation heating starts. As a result, electric power that can be supplied to the components other than the heater 121 can be increased while reducing time taken, after a request to generate an aerosol is given, to establish a state where the predetermined amount of aerosol or more can be generated.

### <Second Embodiment>

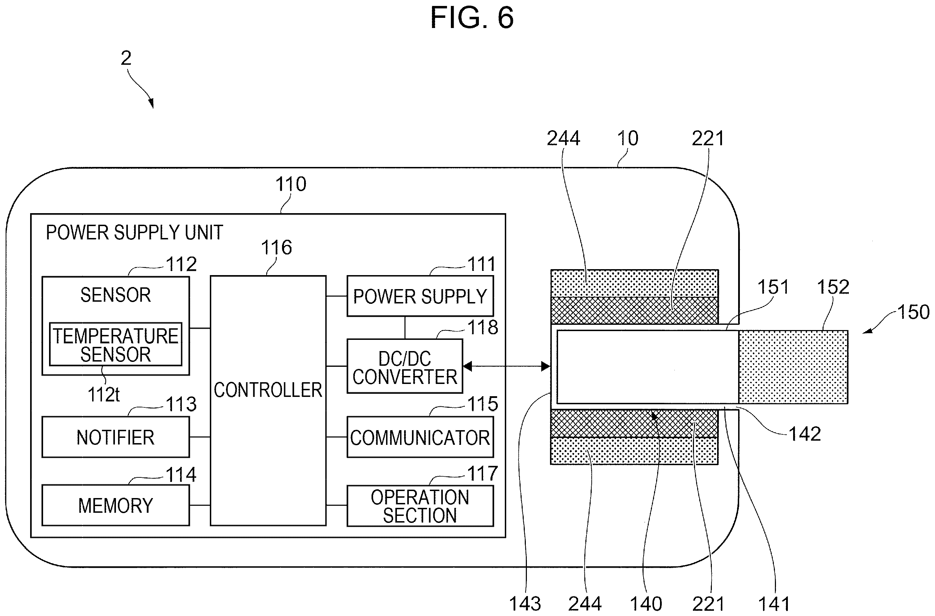

Fig. 6 is a diagram schematically illustrating an example of a schematic configuration of an inhaler device 2 according to a second embodiment.

The inhaler device 2 according to the second embodiment is different from the inhaler device 1 according to the first embodiment in that the inhaler device 2 includes a heater 221 instead of the heater 121 and also includes a heat insulator 244. Differences from the first embodiment will be described hereinafter. Elements common to the first and second embodiments will be given the same reference numerals, and detailed description thereof is omitted.

The heater 221 is composed of any material, such as a metal or a polyimide. The heater 221 is implemented as a film, for example, and disposed in such a way as to cover an outer circumference of the holder 140. When the heater 221 produces heat, the aerosol source included in the stick substrate 150 is heated from an outer circumference of the stick substrate 150 and atomized to generate the aerosol. The heater 221 produces heat when receiving electric power from the power supply 111.

The heat insulator 244 prevents heat from transferring from the heater 221 to the other components of the inhaler device 2. The heat insulator 244 is disposed in such a way as to cover at least an outer circumference of the heater 221. For example, the heat insulator 244 is composed of a vacuum heat insulator, an aerogel heat insulator, or the like. The vacuum heat insulator is a heat insulator in which glass wool, silica (silicon powder), or the like, for example, is wrapped in a resin film to achieve a high-vacuum state so that gas thermal conductivity becomes as close to zero as possible.

With the inhaler device 2 according to the second embodiment configured as above, too, a state where the predetermined amount of aerosol or more can be generated can be promptly established while reducing electric power wasted by the preliminary heating by heating, using the controller 116, the heater 221 by the same method as that described in the first embodiment.

### <Third Embodiment

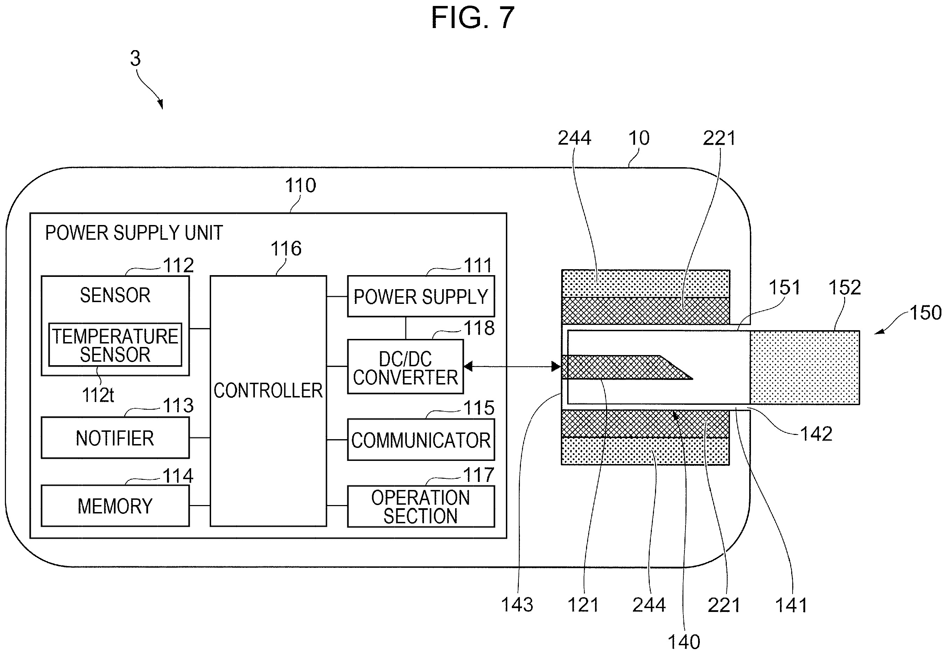

Fig. 7 is a diagram schematically illustrating an example of a schematic configuration of an inhaler device 3 according to a third embodiment.

The inhaler device 3 according to the third embodiment is different from the inhaler device 1 according to the first embodiment in that the inhaler device 3 includes the heater 221 as well as the heater 121 and also includes the heat insulator 244. Differences from the first embodiment will be described hereinafter. Elements common to the first and third embodiments will be given the same reference numerals, and detailed description thereof is omitted.

With the inhaler device 3 according to the third embodiment configured as above, too, a state where the predetermined amount of aerosol or more can be generated can be promptly established while reducing electric power wasted by the preliminary heating by heating, using the controller 116, the heaters 121 and 221 by the same method as that described in the first embodiment.

The controller 116 may perform control such that the temperature of the heater 221 becomes lower than that of the heater 121. This is because heat produced by the heater 221 tends to transfer to the other components of the inhaler device 3 more easily than heat produced by the heater 121.

Although Fig. 7 illustrates an example where the heater 221 is provided on the outer circumference of the holder 140, this configuration example is not limited to this example. For example, the heater 221 may be disposed in such a way as to cover the bottom 143 of the holder 140.

### <Fourth Embodiment>

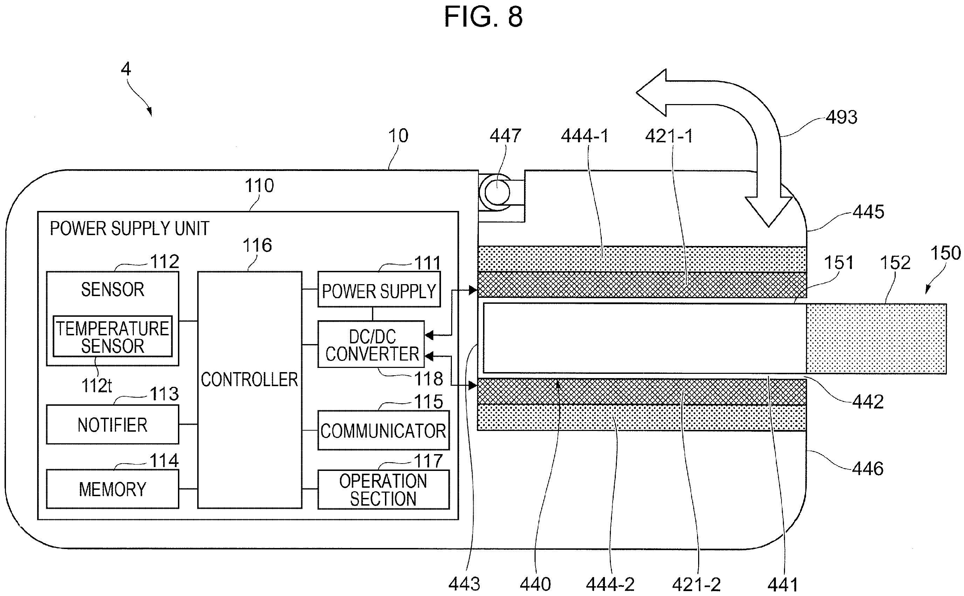

Fig. 8 is a diagram schematically illustrating an example of a schematic configuration of an inhaler device 4 according to a fourth embodiment.

The inhaler device 4 according to the fourth embodiment is different from the inhaler device 1 according to the first embodiment in that the inhaler device 4 includes a heater 421 and a holder 440 instead of the heater 121 and the holder 140 and also includes a heat insulator 444. Differences from the first embodiment will be described hereinafter. Elements common to the first and fourth embodiments will be given the same reference numerals, and detailed description thereof is omitted.

The holder 440 has an internal space 441 and holds the stick substrate 150 while accommodating part of the stick substrate 150 in the internal space 441. The holder 440 has an opening 442 that allows the internal space 441 to communicate with the outside and holds the stick substrate 150 inserted into the internal space 441 from the opening 442. For example, the holder 440 may be a tubular body having the opening 442 and a bottom 443 at two ends thereof, respectively, and defines the pillar-shaped internal space 441. Inside diameter of the holder 440 is smaller than outside diameter of the stick substrate 150 in at least part of a height direction of the tubular body, and the holder 440 can hold the stick substrate 150 by compressing the stick substrate 150 inserted into the internal space 441 from an outer circumference of the stick substrate 150. The holder 440 also has a function of defining a path of air supplied to the stick substrate 150. The bottom 443, for example, has an air inlet hole that serves as an inlet of air into the airflow path. The opening 442, on the other hand, has an air outlet hole that serves as an outlet of air from the airflow path.

The internal space 441 in the holder 440, however, is implemented as a space sandwiched between a first housing 445 and a second housing 446. The holder 440 also includes an opening/closing mechanism 447, which is a mechanism that opens and closes the first housing 445 in a direction indicated by an arrow 493. The opening/closing mechanism 447 is, for example, a hinge. The holder 440 opens and closes the first housing 445 using the opening/closing mechanism 447 and holds the stick substrate 150 by sandwiching the stick substrate 150 between the first housing 445 and the second housing 446.

The heater 421 includes a heater 421-1 and a heater 421-2. The heaters 421-1 and 421-2 heat the aerosol source to atomize the aerosol source and generate the aerosol. The heaters 421-1 and 421-2 are composed of any material, such as a metal or a polyimide. The heaters 421-1 and 421-2 are formed as films, for example, and disposed in such a way as to cover an outer circumference of the holder 440. The heater 421-1, however, is provided for the first housing 445, and the heater 421-2 is provided for the second housing 446. When the heaters 421-1 and 421-2 produce heat, the aerosol source included in the stick substrate 150 is heated from the outer circumference of the stick substrate 150 and atomized to generate the aerosol. The heaters 421-1 and 421-2 produce heat when receiving electric power from the power supply 111.

The heat insulator 444 includes a heat insulator 444-1 and a heat insulator 444-2. The heat insulators 444-1 and 444-2 prevent heat from transferring from the heaters 421-1 and 421-2 to the other components of the inhaler device 4. The heat insulator 444-1 is provided for the first housing 445. The heat insulator 444-1 is disposed in such a way as to cover at least an outer circumference of the heater 421-1 . The heat insulator 444-2 is provided for the second housing 446. The heat insulator 444-2 is disposed in such a way as to cover at least an outer circumference of the heater 421-2. For example, the heat insulators 444-1 and 444-2 are composed of a vacuum heat insulator, an aerogel heat insulator, or the like. The vacuum heat insulator is a heat insulator in which glass wool, silica (silicon powder), or the like, for example, is wrapped in a resin film to achieve a high-vacuum state so that gas thermal conductivity becomes as close to zero as possible.

With the inhaler device 4 according to the fourth embodiment configured as above, too, a state where the predetermined amount of aerosol or more can be generated can be promptly established while reducing electric power wasted by the preliminary heating by heating, using the controller 116, the heaters 421-1 and 421-2 by the same method as that described in the first embodiment.

### <Fifth Embodiment>

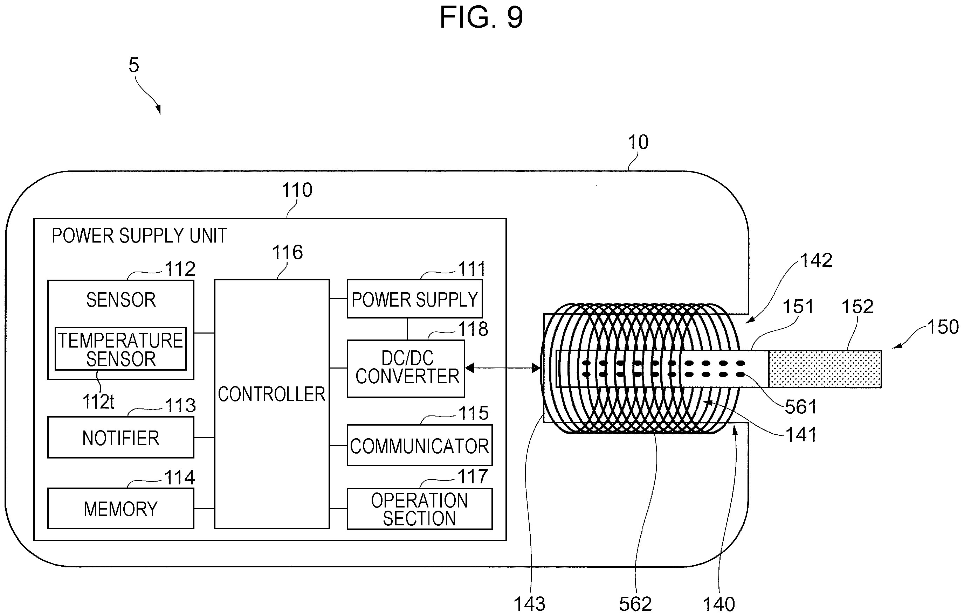

Fig. 9 is a diagram schematically illustrating an example of a schematic configuration of an inhaler device 5 according to a fifth embodiment.

The inhaler device 5 according to the fifth embodiment is different from the inhaler device 1 according to the first embodiment in that an aerosol is generated by heating a substrate including an aerosol source through induction heating (IH). Differences from the first embodiment will be described hereinafter. Elements common to the first and fifth embodiments will be given the same reference numerals, and detailed description thereof is omitted.

As illustrated in Fig. 9, the inhaler device 5 includes the power supply unit 110, the holder 140, susceptors 561, and an electromagnetic induction source 562.

The susceptors 561 are included in the stick substrate 150. The susceptors 561 produce heat through electromagnetic induction. The susceptors 561 are composed of a conductive material such as a metal. In an example, the susceptors 561 are pieces of metal. The susceptors 561 are provided close to the aerosol source. In the example illustrated in Fig. 9, the susceptors 561 are included in the substrate 151 of the stick substrate 150.

The electromagnetic induction source 562 heats the susceptors 561 through electromagnetic induction. The electromagnetic induction source 562 is implemented as a coiled conductor, for example, and is disposed in such a way as to be wound around the outer circumference of the holder 140. When an alternating current is supplied from the power supply 111, the electromagnetic induction source 562 generates a magnetic field. The electromagnetic induction source 562 is disposed at such a position that the internal space 141 of the holder 140 overlaps the generated magnetic field. When the magnetic field is generated with the stick substrate 150 held by the holder 140, therefore, eddy currents are caused at the susceptors 561, thereby generating Joule heat. The aerosol source included in the stick substrate 150 is then heated by the Joule heat and atomized to generate the aerosol.

Although Fig. 9 illustrates an example where the susceptors 561 are included in the substrate 151 of the stick substrate 150, this configuration example is not limited to this example. For example, the holder 140 may have a function of the susceptors 561, instead. In this case, the magnetic field generated by the electromagnetic induction source 562 causes eddy currents at the holder 140, thereby generating Joule heat. The aerosol source included in the stick substrate 150 is then heated by the Joule heat and atomized to generate the aerosol.

With the inhaler device 5 according to the fifth embodiment configured as above, too, a state where the predetermined amount of aerosol or more can be generated can be promptly established while reducing electric power wasted by the preliminary heating by heating, using the controller 116, the electromagnetic induction source 562 by the same method as that described in the first embodiment.

### <Sixth Embodiment>

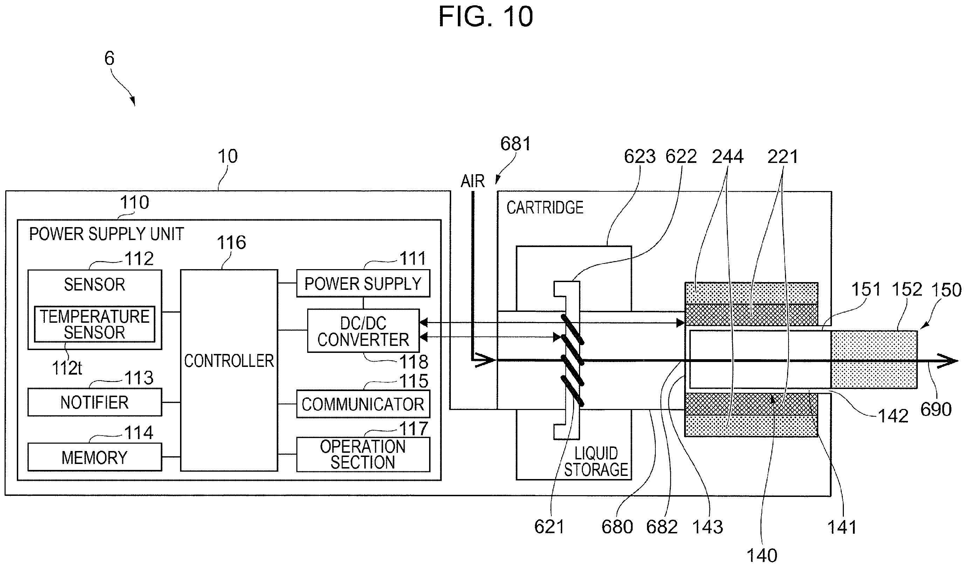

Fig. 10 is a diagram schematically illustrating an example of a schematic configuration of an inhaler device 6 according to a sixth embodiment.

The inhaler device 6 according to the sixth embodiment is different from the inhaler device 2 according to the second embodiment in that an aerosol is generated by heating a liquid aerosol source in addition to the generation of an aerosol through heating of a substrate including an aerosol source. Differences from the first embodiment will be described hereinafter. Elements common to the first and sixth embodiments will be given the same reference numerals, and detailed description thereof is omitted.

The inhaler device 6 includes the power supply unit 110, the heater 221, the holder 140, a liquid guide 622, a liquid storage 623, and a heater 621. An airflow path 680 is formed in the inhaler device 6. With the inhaler device 6, the user inhales with the stick substrate 150 held by the holder 140.

The liquid storage 623 stores an aerosol source. When heated, the aerosol source is atomized to generate an aerosol. The aerosol source is, for example, a liquid such as polyhydric alcohol, which may be glycerine or propylene glycol, or water. The aerosol source may also include a tobacco material or an extract from a tobacco material that emits a flavor component through heating. The aerosol source may also include nicotine. When the inhaler device 6 is a medical inhaler such as a nebulizer, the aerosol source may include a medicine to be inhaled by a patient.

The liquid guide 622 guides the aerosol source, which is the liquid stored in the liquid storage 623, from the liquid storage 623 and holds the aerosol source. The liquid guide 622 is, for example, a wick formed by twining a fiber material such as glass fiber or another porous material such as a porous ceramic. The liquid guide 622 is in liquid connection to the liquid storage 623. The aerosol source stored in the liquid storage 623, therefore, is spread throughout the liquid guide 622 by a capillary effect.

The heater 621 heats the aerosol source, which is the liquid stored in the liquid storage 623, to atomize the aerosol source and generate the aerosol. The heater 621 is composed of any material, such as a metal or a polyimide, in any shape, such as a coil, a film, or a blade. The heater 621 is provided close to the liquid guide 622. In the example illustrated in Fig. 10, the heater 621 implemented as a metal coil wound around the liquid guide 622. When the heater 621 produces heat, therefore, the aerosol source held by the liquid guide 622 is heated and atomized to generate the aerosol. The heater 621 produces heat when receiving electric power from the power supply 111. In an example, the electric power may be supplied to the heater 621 to generate the aerosol if the pressure sensor (not illustrated) provided for the sensor 112 detects the user's inhalation during the above-described inhalable period. While the pressure sensor provided for the sensor 112 is detecting the user's inhalation, electric power may be supplied to the heater 621 to generate the aerosol.

The airflow path 680 is a flow path of air to be inhaled by the user. The airflow path 680 has a tubular structure including an air inlet hole 681, which is an inlet of air into the airflow path 680, and an air outlet hole 682, which is an outlet of air from the airflow path 680, as two ends. As the user inhales, air flows into the airflow path 680 from the air inlet hole 681 and flows out to the internal space 141 of the holder 140 through the air outlet hole 682. In an example, the air inlet hole 681 is provided at any position in the inhaler device 6. The air outlet hole 682, on the other hand, is provided in the bottom 143 of the holder 140. The liquid guide 622 is provided in the airflow path 680. The aerosol generated by the heater 621 mixes with the air flowing from the air inlet hole 681. Next, as the user inhales, the mixture fluid of the aerosol and the air is conveyed to the internal space 141 of the holder 140 through the air outlet hole 682 as indicated by an arrow 690. The mixture fluid of the aerosol and the air conveyed to the internal space 141 of the holder 140 reaches the inside of the user's mouth along with the aerosol generated by the heater 221.

With the inhaler device 6 according to the sixth embodiment configured as above, too, a state where the predetermined amount of aerosol or more can be generated can be promptly established while reducing electric power wasted by the preliminary heating by heating, using the controller 116, the heater 221 by the same method as that described in the first embodiment.

In addition, when the above-described inhalable period starts, the heater 621 may start to produce heat in such a way as to increase temperature of the liquid to the second temperature or higher but lower than a boiling point of the liquid (e.g., 50°C), and if the pressure sensor provided for the sensor 112 detects the user's inhalation thereafter, the heater 621 may produce heat in such a way as to increase the temperature of the liquid to the boiling point of the liquid or higher, thereby generating the aerosol. As a result, a large amount of atomized aerosol source can be inhaled from an initial stage of the inhalation.

In this configuration example, the aerosol may be generated through vibration or IH instead of the heating by the heater 621.

When the aerosol is generated through vibration, the inhaler device 6 includes a vibrator instead of the heater 621. For example, the vibrator is implemented as a plate-shaped member including a piezoceramic that functions as an ultrasonic vibrator. When the vibrator vibrates, the aerosol source guided by the liquid guide 622 to a surface of the vibrator is atomized by ultrasonic waves caused by the vibration of the vibrator, and the aerosol is generated.

When the aerosol is generated through IH, the inhaler device 6 includes a susceptor and an electromagnetic induction source instead of the heater 621. The susceptor produces heat through electromagnetic induction. The susceptor is composed of a conductive material such as a metal. The susceptor is provided close to the liquid guide 622. The susceptor is implemented as a metal conductor, for example, and wound around the liquid guide 622. The electromagnetic induction source heats the susceptor through electromagnetic induction. The electromagnetic induction source is implemented as, for example, a coiled conductor. When the power supply 111 supplies an alternating current, the electromagnetic induction source generates a magnetic field. The electromagnetic induction source is disposed at such a position that the susceptor overlaps the generated magnetic field. When the magnetic field is generated, therefore, eddy currents are caused at the susceptor, thereby generating Joule heat. The aerosol source held by the liquid guide 622 is then heated by the Joule heat and atomized to generate the aerosol.

Similarly, in this configuration example, the heater 121 may be included instead of, or in addition to, the heater 221. The heater 421 may be included instead of the heater 221. The electromagnetic induction source 562 may be included instead of the heater 221, and the aerosol may be generated through IH. In this case, the stick substrate 150 may also include a susceptor

### Reference Signs List

- 1, 2, 3, 4, 5, 6: inhaler device
- 10: housing
- 110: power supply unit
- 111: power supply
- 112: sensor
- 112t: temperature sensor
- 116: controller
- 117: operation section
- 118: DC/DC converter
- 121, 221, 421, 621: heater
- 140: holder
- 150: stick substrate

## Claims

1. An inhaler device comprising:
a heater that heats an aerosol source, which, when heated, generates an aerosol;
a power supply that accumulates electric power; and
a controller that controls supply of electric power from the power supply to the heater,
wherein, if a request to generate the aerosol is given, the controller performs first heating in order to increase temperature of the aerosol source to a first temperature, at which the aerosol source is atomized, or higher and, if an event regarded as a sign of the request is detected before the request is given, performs second heating in order to increase the temperature of the aerosol source to a second temperature or higher but lower than the first temperature before the first heating.

2. The inhaler device according to claim 1,
wherein, if a predetermined ending condition is satisfied after the second heating starts, the controller stops the second heating.

3. The inhaler device according to claim 1,
wherein the controller makes electric power in the first heating that has started after the second heating smaller than electric power in the first heating that has started without the second heating being performed.

4. The inhaler device according to any of claims 1 to 3, further comprising:
an operation section operable by a user,
wherein the request is a predetermined first operation performed on the operation section, and
wherein the event is a predetermined second operation, which is defined as different from the first operation, performed on the operation section.

5. The inhaler device according to any of claims 1 to 4, further comprising:
a gyro sensor,
wherein the event is a change of an output value of the gyro sensor from a value indicating a state where height of the power supply and height of the heater are the same to a value indicating a state where the height of the heater is greater than the height of the power supply.

6. The inhaler device according to any of claims 1 to 5, further comprising:
a tactile sensor that detects that the user is touching the inhaler device with his/her hand,
wherein the event is an output value of the tactile sensor indicating that the user is touching the inhaler device with his/her hand.

7. The inhaler device according to any of claims 1 to 6, further comprising:
an acceleration sensor,
wherein the event is an output value of the acceleration sensor becoming larger than or equal to a predetermined threshold.
